# EUROPEAN PATENT SPECIFICATION

(11) **EP 2 426 268 B1**
(45) Date of publication and mention of the grant of the patent: **26.01.2022**
(21) Application number: 10175662.5
(22) Date of filing: 07.09.2010
(51) Int. Cl.: E02F 3/36

(54) **A coupling arrangement**
Kupplungsanordnung
Agencement de couplage

(43) Date of publication of application: 07.03.2012
(73) Proprietor: Caterpillar Work Tools B. V., 5232 BJ 's-Hertogenbosch (NL)
(72) Inventor: Van Hooft, Cornelius Antonius Maria, 5268 AH Helvoirt (NL); Luyendijk, Dirk Jacobus, 5473 RE Heeswijk-Dinther (NL); Jongebloed, Holger, 26389 Wilhelmshaven (DE)
(74) Representative: Novagraaf Group

(56) References cited:
- EP-A1- 1 473 415
- WO-A1-2004/072387
- FR-A1- 2 886 372
- US-A- 5 829 337

## Description

### Technical Field

The present disclosure is directed to a coupling arrangement, more particularly to a coupling arrangement for coupling a work tool to a machine.

### Background

Work tools, such as shears, grabs, or buckets may be coupled with host machines, such as excavators, to perform work operations like cutting, grabbing or excavating. The work tools may be coupled to a boom or stick mechanism of the host machine via a fixed connection or a quick release connection.

A quick release connection allows for a relatively easy exchange of the work tool whereby the operator may connect or change a work tool without leaving the cab. The machine mounting bracket is arranged to slide into the work tool mounting bracket, when the work tool is positioned on the ground. After aligning the mounting bracket of the work tool and the mounting bracket of the machine, a locking device may be moved into a locked position to lock the work tool to the machine.

When connecting the work tool to the machine, the hydraulic hoses of the machine and work tool pressure fluid circuits may be connected for driving the work tool. Automatic hydraulic hose connection systems are known which may be activated by the operator from the cab for connection of the hydraulic hoses. Such systems may often be dependent on the connection of the work tool to the machine. Hydraulic hose couplers may be provided and arranged so that during connection of the work tool to the machine the hose couplers are also automatically connected. When the work tool mounting bracket is connected to the machine mounting bracket, the hose couplers may be contemporaneously connected.

However, aligning the hose couplers may require a higher level of accuracy than alignment of the mounting brackets. In practice, when a coupling arrangement is provided with such hose couplers, an operator may try to avoid relatively rough movements and high forces that are typical when connecting the work tool to the machine. Such actions may result in loss in efficiency. Nevertheless, a relatively high risk to cause damage to the hydraulic hose couplers remains due to the high forces and potential rough alignments between the mounting brackets. When the hose couplers are not aligned accurately, at connection of the machine and work tool pressure fluid circuits, pressurized fluid may escape or the couplers and/or hoses may need to be changed. As the hydraulic circuits of host machines may operate under relatively high pressures, any leakage may cause major spillage of hydraulic fluid and significant downtime.

EP1388616 discloses a coupling arrangement for coupling two ends of a pressurized hydraulic fluid circuit of a work tool and a machine. The coupling arrangement may comprise a quick release mounting bracket for coupling a work tool to a machine. The coupling arrangement may comprise a receiving fluid coupler and a moving fluid coupler, each coupler being connected to a hydraulic hose of a main hydraulic circuit.

One of the couplers may be arranged on the work tool and the other coupler may be arranged on the machine. Both couplers may be connected to each other for providing a fluid passage between the hydraulic hoses so that pressurised fluid may circulate between the fluid circuit of a work tool and a machine. The moving fluid coupler may be moved on a sledge to and from the receiving fluid coupler by an actuator. When the respective moving coupler is coupled to the receiving coupler, a locking notch may engage the moving coupler to keep both couplers coupled so that the actuator may release its pressure while fluid flows through the couplers. The locking notch requires significant space in the coupling arrangement. Moreover, after multiple engagements, the locking notch may become damaged, or may allow for play to occur which may cause leakage of fluid between the couplers. However, without the locking notch, the actuator would have to withstand significant forces that are exerted by the pressurised fluid flowing through the circuit, which may disengage the couplers. Furthermore, during movement of the coupler, the hydraulic hose that is coupled to the moving coupler may become wedged, caught, or trapped in or between the structure of the machine and/or the work tool.

WO2010062166, in the name of Caterpillar Work Tools B.V., discloses a coupling arrangement for coupling a work tool to a machine. The coupling arrangement may have a locking arrangement for locking the work tool to the machine. The locking arrangement may comprise a locking member which may be moved to a locked position where it abuts the locking member receiving elements.

The coupling arrangement further may have at least two fluid couplers arranged to be connected to each other for establishing a fluid passage between a main pressurized fluid circuit channel of a work tool and a main pressurized fluid circuit channel of a machine. The coupling arrangement may further have a driving arrangement for driving at least one of the fluid couplers for connection to the other fluid coupler, the driving arrangement being separate from the main pressurized fluid circuit.

The present disclosure is directed, at least in part, to improving or overcoming one or more aspects of the prior art system. Document EP 1473415 A discloses another coupling arrangement for fluid coupling a work tool to a machine as closest prior art.

### Brief Summary of the Invention

In a first aspect, the present disclosure provides a coupling arrangement for fluid coupling a work tool to a machine as defined in claim 1.

In a second aspect, the present disclosure provides a method of coupling a work tool to a machine comprising as defined in claim 4.

Other features and advantages of the present disclosure will be apparent from the following description of various embodiments, when read together with the accompanying drawings.

### Brief Description of the Drawings

The foregoing and other features and advantages of the present disclosure will be more fully understood from the following description of various embodiments, when read together with the accompanying drawings, in which:
Fig. 1 is a side view of a machine and a work tool provided with a coupling arrangement according to the present disclosure;
Fig. 2 is a schematic representation of an embodiment of the coupling arrangement according to the present disclosure;
Fig. 3 is an isometric view of an embodiment of a coupling assembly according to the present disclosure;
Fig. 4 is a cross sectional view of a mounted coupling assembly of Fig. 2 in a retracted position according to the present disclosure; and
Fig. 5 is a cross sectional view of a mounted coupling assembly of Fig. 2 in an extended position according to the present disclosure.

### Detailed Description

This disclosure generally relates to a coupling arrangement **10** for coupling a machine hydraulic fluid circuit to a work tool hydraulic fluid circuit.

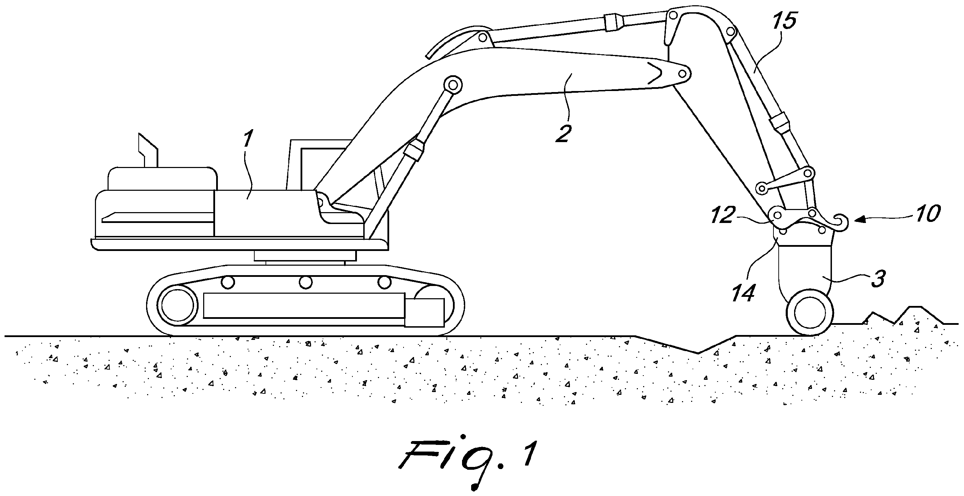

Fig. 1 illustrates a host machine **1,** as a hydraulic excavator, which may be provided with a hydraulic boom mechanism for driving a boom **2** and a work tool **3.** In this description, a boom **2** may be understood as comprising a hydraulic stick mechanism, or similar mechanisms.

Machine **1** may be a mobile machine such as for example an excavator, a back hoe, a digger, a loader, a knuckle boom loader, a harvester or a forest machine.

The work tool **3** may be coupled to the machine **1** through the boom **2.** In the embodiment shown, the work tool **3** may comprise a rotary cutter. In other embodiments, work tools **3** may for example include buckets, grapples, hammers and pulverizers.

The work tool **3** may comprise a frame that which carries multiple exchangeable and/or interchangeable tools.

The machine **1** may be provided with a coupling arrangement **10.** The coupling arrangement **10** allows for fluid coupling between a machine bracket **12** and a work tool bracket **14.** The machine bracket **12** may be connected to the machine **1.** The work tool bracket **14** may be connected to the work tool **3.**

A pressurised fluid assembly **15** may extend along the boom **2** for moving the boom **2** and the work tool **3.** The pressurised fluid assembly **15** may comprise multiple hydraulic circuits, including a machine fluid circuit and an actuation fluid circuit.

The work tool **3** may comprise a work tool fluid circuit for the hydraulic control thereof. The machine fluid circuit may control fluid flow through the work tool fluid circuit.

The machine fluid circuit is arranged to drive the boom **2** and to pivot the boom parts with respect to each other. The machine fluid circuit is arranged to move the work tool **3.** For example, the machine fluid circuit may be arranged to pivot and/or rotate the work tool **3** or may be arranged to drive moving parts in the work tool **3,** such as rotary parts. The actuation fluid circuit is arranged to enable fluid coupling between the machine fluid circuit and the work tool fluid circuit.

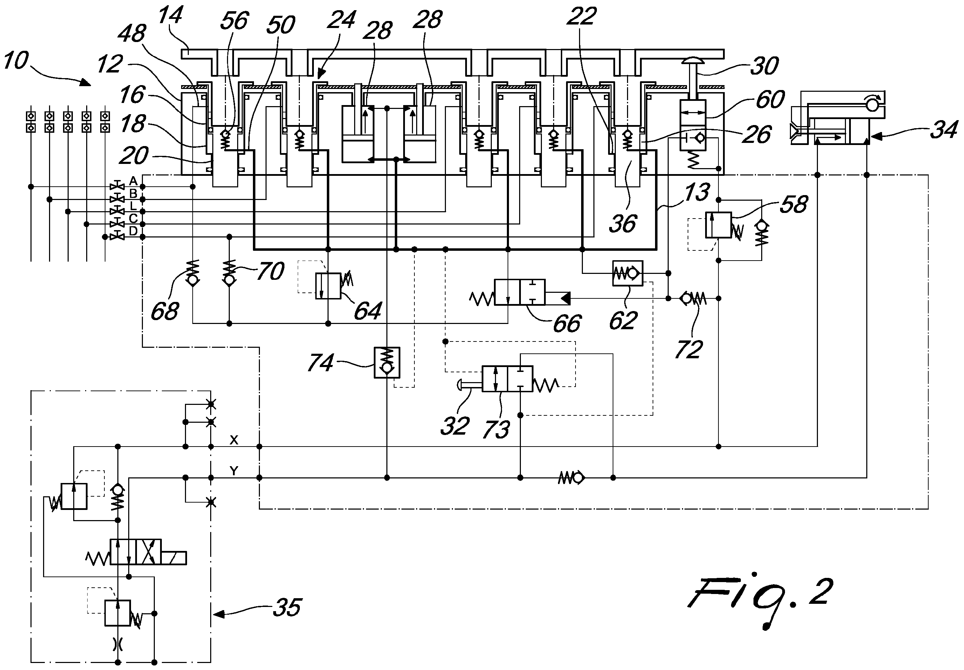

Fig. 2 illustrates an embodiment of a coupling arrangement **10** with hydraulic connections for connecting a machine bracket **12** to a work tool bracket **14** and for forming at least one fluid passage between the machine fluid circuit and the work tool fluid circuit.

The coupling arrangement **10** may comprise the machine bracket **12** which is provided with at least one cavity **16.** The cavity **16** may extend through the machine bracket **12** and may have a cavity wide portion **18** and a cavity narrow portion **20.**

Cavity narrow portion **20** may be formed as a plurality of extensions of the wall of cavity **16.** In an embodiment, the cavity narrow portion **20** may be a single block extension of the wall of cavity **16.** A shoulder **22** may be formed between the cavity wide portion **18** and the cavity narrow portion **20.**

The coupling arrangement **10** comprises a coupler assembly **24** movably mounted in the cavity **16.** Both the cavity **16** and the coupler assembly **24** are correspondingly shaped to allow for the relative movement of the coupler assembly **24.** The coupler assembly **24** is slidably mounted with at least portions thereof being in sliding engagement with the wall of the cavity **16.** The coupler assembly **24** slides between a retracted position, where the coupler assembly **24** retracts fully or partially into the cavity **16,** and an extended position, where the coupler assembly **24** protrudes from the machine bracket **12** for engagement with a corresponding fluid coupler in the work tool bracket **14.**

The coupling arrangement **10** may comprise a chamber **26** provided in the cavity **16.** In an embodiment the chamber **26** may be formed in the cavity wide portion **18** and may be bounded by the wall of the cavity wide portion **18,** the shoulder **22** and the coupler assembly **24.**

The size of chamber **26** may vary through the movement of the coupler assembly **24** relative to the machine bracket **12.** The size of chamber **26** may be made to vary through the inflow and outflow of hydraulic fluid which may move the coupler assembly **24** relative to the machine bracket **12.** The changes in the size of the chamber **26** may effect the corresponding retraction and extension of the coupling assembly **24.**

The machine bracket **12** is provided with a series of cavities **16.** Each cavity **16** has a movably mounted coupler assembly **24** and a chamber **26.** For fluid coupling the machine bracket **12** to a work tool bracket **14,** the work tool bracket **14** comprises fluid couplers which connect to corresponding coupler assemblies **24** mounted in the machine bracket **12.** Fluid coupling the machine bracket **12** to a work tool bracket **14** is effected with the coupler assemblies **24** in the fully extended positions or the connect position. The coupler assemblies **24** is in a disconnect position when retracted from the fully extended position.

For operation and control of the coupling arrangement **10** the hydraulic connections may be suitably provided. The machine fluid circuit comprise hydraulic lines leading to the cavities **16** for connection to respective coupler assemblies **24.** The hydraulic lines A, B, C, D and L of the machine fluid circuit allow flow of hydraulic fluid to and from the work tool fluid circuit when fluid coupling between the brackets **12, 14** are established. Hydraulic fluid flows through the coupler assemblies **24** in the connect position to and from the corresponding fluid couplers in the work tool bracket **14.**

The coupling arrangement **10** may include hydraulic connections to a quick coupler mechanism for locking together brackets **12, 14,** such as a quick coupler wedge.

The actuation fluid circuit may be controlled independently from the machine fluid circuit. The actuation fluid circuit includes at least one actuator **28.** In an embodiment, the actuator may be a hydraulic cylinder. The actuator **28** is connected contemporaneously to all the coupler assemblies **24.** The actuator **28** may be connected to the coupler assemblies **24** through suitable linkages such as through a connecting rod.

Retraction or extension of the actuator **28** correspondingly retracts or extends the coupler assemblies **24** to a disconnect position or to a connect position respectively. The coupler assemblies **24** are uniformly retracted or extended by the actuator **28.** In an embodiment, a pair of actuators **28** may be provided to ensure an evenly balance load for fluid coupling or decoupling between the coupler assemblies **24** and the corresponding fluid couplers.

The operation of the actuation fluid circuit is controlled by a bracket switch **30.** Bracket switch **30** controls hydraulic fluid flow for the extension of the coupler assemblies **24.** Bracket switch **30** is suitably disposed in order to detect when a work tool bracket **14,** having at least one corresponding fluid coupler, is mounted to a machine bracket **12.** In an embodiment, the bracket switch **30** may be suitably positioned on the machine bracket **12.** The bracket switch **30** may not be activated if the work tool bracket **14** does not carry any corresponding fluid couplers and fluid coupling may not be effected as no flow of hydraulic fluid to extend the coupler assemblies **24** to the connect position is permitted by the bracket switch **30.** Bracket switch **30** may prevent actuation of the coupler assemblies **24** when no corresponding fluid couplers are present in the attached work tool bracket **14.**

The operation of the machine fluid circuit may be further controlled by a switch **32.** Switch **32** may control the flow of hydraulic fluid to a locking device **34** for the unlocking of the brackets **12, 14.** Switch **32** may be arranged to be activated only when the actuator **28** is in a fully retracted position. The switch **32** may be arranged not to be activated when the actuator **28** is in an extended position and unlocking of the brackets **12, 14** may not be effected as no flow of hydraulic fluid to actuate the locking device **34** is permitted by the switch **32.** Switch **32** prevents premature decoupling between the machine bracket **12** and the work tool bracket **14** when coupler assemblies **24** have not been retracted from the connect position.

In an embodiment the switches **30, 32** may be sensors connected to actuating mechanisms. In an embodiment the switches **30, 32** may be a solenoid or a hydro mechanical device. In an embodiment the switches **30, 32** may be hydromechnical switches which are activated upon physical contact with work tool bracket **14** and the actuator **28.**

The coupling arrangement **10** may further comprise a rail circuit **13,** denoted by a bold line in Fig. 2, which connects together each chamber **26.** The rail circuit **13** may be comprised of a single hydraulic line connected to each of the chambers **26** through further hydraulic lines. The rail circuit **13** may distribute the fluid pressure equally among the chambers **26.** Accordingly, the highest pressure in any one chamber **26** may generate the load required to effect the corresponding extension of the coupler assemblies **24** in the other chambers **26.** The chamber **26** having the highest working pressure may define the force presented to all coupler assemblies **24.**

The rail circuit **13** may be connected to the actuators **28.** In an embodiment, the rail circuit **13** may be connected to the piston side of the actuators **28,** provided as a hydraulic cylinder.

The coupling arrangement **10** may be connected to a hydraulic power circuit **35** for providing hydraulic pressure to lock and unlock machine bracket **12** to the work tool bracket **14.** Unlocking of the brackets **12, 14** by the hydraulic power circuit **35** may be controlled by the switch **32** through hydraulic connections between the hydraulic power circuit **35** and the switch **32.**

The hydraulic power circuit **35** may be connected to the actuator **28.** In an embodiment, the hydraulic power circuit **35** may be connected to the rod side of the actuator **28,** provided as a hydraulic cylinder.

The hydraulic power circuit **35** may be arranged to provide pressurised fluid to the rail circuit **13.** The bracket switch **30** may be disposed in the connection between the hydraulic power circuit **35** and the rail circuit **13.**

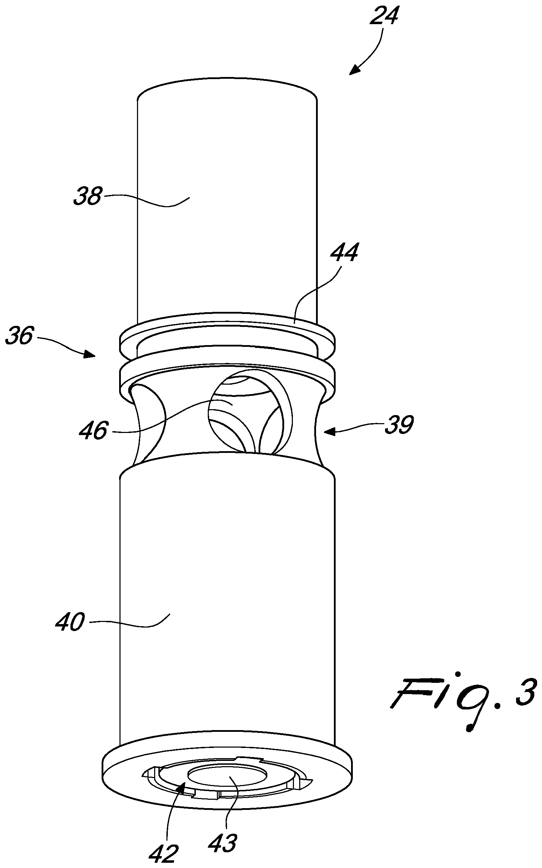

Fig. 3 illustrates a coupler assembly **24.** The coupler assembly **24** may comprise a hollow plunger **36.** Plunger **36** may have a suitable form and dimensions to be slidingly mounted within the cavity **16.** Plunger **36** may have a plunger narrow portion **38,** a gate portion **39** and a plunger wide portion **40.** In an embodiment, the gate portion **39** may be positioned within the plunger wide portion **40** and adjacent to the plunger narrow portion **38.** The gate portion **39** may be recessed from the plunger wide portion **40.**

The plunger narrow portion **38** may be in sliding engagement with the cavity narrow portion **20.** The plunger narrow portion **38** may be arranged to sealingly engage with cavity narrow portion **20** to restrict leakage of hydraulic fluid between the plunger narrow portion **38** and the cavity narrow portion **20.**

The plunger wide portion **40** may be in sliding engagement with the cavity wide portion **18.** The plunger wide portion **40** may be arranged to sealingly engage with cavity wide portion **18** to restrict leakage of hydraulic fluid between the plunger wide portion **40** and the cavity wide portion **18.**

The gate portion **39** may not be in contact with wall of the cavity wide portion **18.**

A fluid coupler **42** may be positioned within the plunger **36.** Plunger **36** may be provided with retaining structures to hold the fluid coupler **42** within the walls thereof. Fluid coupler **42** may have a through fluid channel **43** along the longitudinal axis of the plunger **36.** The fluid channel **43** may communicate with the hollow of the plunger **36.**

The fluid coupler **42** may couple with the corresponding fluid coupler, having a fluid channel disposed therein, in the work tool bracket **14.** Respective fluid channels form a fluid passage when the fluid couplers are connected. At fluid coupling hydraulic fluid from the machine fluid circuit may flow through the fluid channels to the work tool fluid circuit. Fluid coupler **42** may be formed as a male or female element for coupling to the fluid coupler with the corresponding form.

Extending laterally from the plunger **36** may be a pressure element **44.** In an embodiment the pressure element **44** may encircle the plunger **36** and may be formed as a rib or a protrusion. In an embodiment the pressure element **44** may extend from and encircle the plunger wide portion **40.** With the coupler assembly **24** mounted in the cavity **16,** the pressure element **44** may extend from the plunger **36** through the cavity **16** to slidingly engage the wall of the cavity wide portion **18.** The pressure element **44** may separate the chamber **26** from rest of the cavity wide portion **18.**

The pressure element **44** may be arranged to sealingly engage with the wall of the cavity wide portion **18** to limit leakage of hydraulic fluid between the wall of the cavity wide portion **18** and the pressure element **44.** The pressure element **44** may be suitably shaped or may be provided with a gasket to slidingly and sealingly engage cavity wide portion **18.**

The pressure element **44** may have a pressure surface **45** which, in an embodiment, may face the shoulder **22.** The dimensions and/or shape of the pressure surface **45** may be a function of the diameter of the coupler assembly **24,** the diameter of the fluid coupler **42,** the diameter of the corresponding fluid coupler in the work tool bracket **14** and/or the difference in the diameters of the fluid coupler **42** and the corresponding fluid coupler. The dimensions and/or shape of the pressure surface **45** may depend on the fluid dynamics of the fluid coupler **42** and the corresponding fluid coupler. Fluid dynamics may be dependent on the structure of fluid couplers, the type of hydraulic fluid and/or the fluid pressure used for the fluid coupling.

At least one bore **46** may be provided in the plunger **36** which may allow flow of hydraulic fluid from the exterior of the plunger **36** into the hollow thereof. The fluid channel **43** of the fluid coupler **42** may communicate through the hollow of the plunger **36** with the bore **46.** The bore **46** may be provided in the gate portion **39.** In an embodiment, the gate portion **39** may be provided with a plurality of bores **46.** Hydraulic fluid may flow around the gate portion **39** guided by walls formed by the plunger wide portion **40** and into the hollow through the plurality of bores **46.**

In an embodiment, a single bore **46** may be provided in the plunger **36,** not provided with a gate portion **39.** The bore **46** may be positioned between the pressure element **44** and the plunger wide portion **40.**

The size and the number of the bores **46** may be a function of the diameter of the coupler assembly **24,** the diameter of the fluid coupler **42,** the diameter of the corresponding fluid coupler in the work tool bracket and/or the difference in the diameters of the fluid coupler **42** and the corresponding fluid coupler. The dimensions and/or shape of the bore **46** may be dependent on the dimension and/or shape of the pressure surface **45.** The dimensions and/or shape of the bore **46** may depend on the fluid dynamics of the fluid coupler **42** and the corresponding fluid coupler.

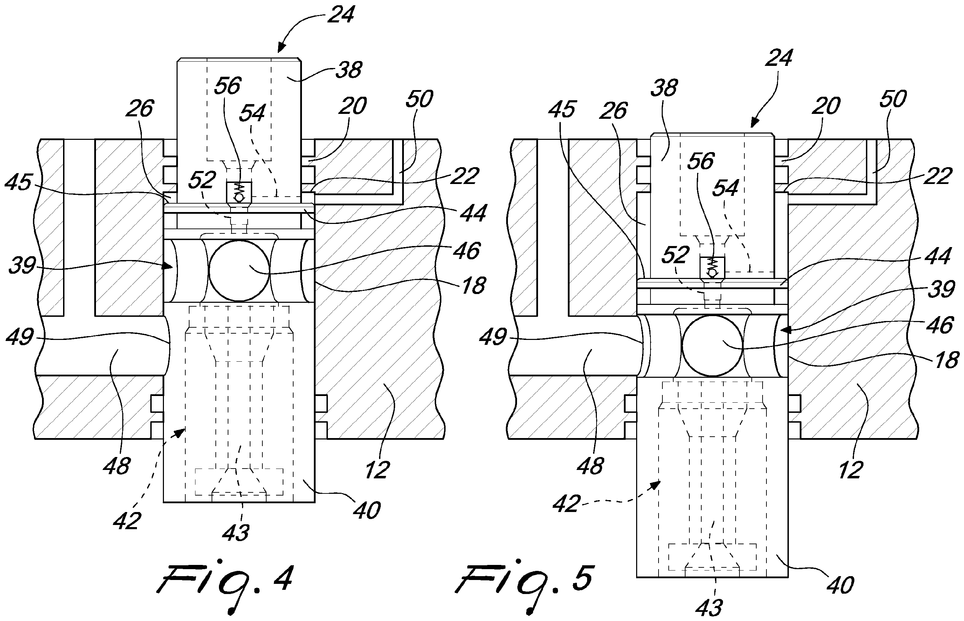

Figs. 4 and 5 illustrate a coupler assembly **24** slidingly mounted in the machine bracket **12.** In Fig. 4 the coupler assembly **24** is retracted to the disconnect position and in Fig. 5 the coupler assembly **24** is extracted to the connect position. The retraction of the coupler assembly **24** within the cavity **16** may be limited by the shoulder **22** which may abut pressure surface **45.**

Machine bracket **12** may have a machine circuit line **48,** which forms part of the machine fluid circuit, leading to the cavity **16.** Fluid from the machine fluid circuit may flow through the machine circuit line **48** to the cavity **16** through a port **49.** In the machine bracket **12** having plurality of cavities **16,** each cavity **16** may be separately connected to the machine fluid circuit through a plurality of corresponding circuit lines **48.** In an embodiment, hydraulic lines A, B, C, D and L may allow flow of hydraulic fluid to and from the ports **49** through respective machine circuit lines **48.**

Machine bracket **12** may have a rail circuit line **50,** which forms part of the rail fluid circuit, leading to the cavity **16.** In an embodiment the rail circuit line **50** leads to the chamber **26.** Fluid from the rail fluid circuit may flow through the rail circuit line **50** to the chamber **26.**

The chamber **26** in the cavity wide portion **18** may be bounded by the wall of the cavity wide portion **18,** the shoulder **22,** the pressure surface **45** and the plunger narrow portion **38.** The size of chamber **26** may depend on the inflow and outflow of hydraulic fluid through the rail circuit line **50.** Inflow of fluid into the chamber **26** may result in an increase in fluid pressure therein, as the chamber **26** may be fluid tight. The fluid pressure may act on the surfaces which bound the chamber **26.** The increasing fluid pressure acting on the pressure surface **45** may effect extraction of the coupler assembly **24** slidingly mounted in the machine bracket **12.** The coupler assembly **24** may be extracted to the connect position through continued inflow of hydraulic fluid under pressure to establish fluid coupling between the fluid coupler **42** and the corresponding fluid coupler in the work tool bracket **14.**

A diversion passage **52** may extend axially within the plunger **36** from the gate portion **39** toward the pressure element **44.** The diversion passage **52** may be axially aligned with the longitudinal axis of the plunger **36.** In an embodiment the diversion passage **52** may extend beyond the pressure element **44.** Hydraulic fluid flowing through the bores **46** may flow into the hollow of the plunger **36** and to the diversion passage **52.**

The dimensions and/or shape of the diversion passage **52** may be a function of the diameter of the coupler assembly **24,** the diameter of the fluid coupler **42,** the diameter of the corresponding fluid coupler in the work tool bracket and/or the difference in the diameters of the fluid coupler **42** and the corresponding fluid coupler. The dimensions and/or shape of the diversion passage **52** may be dependent on the dimension and/or shape of the bore **46.** The dimensions and/or shape of the diversion passage **52** may be dependent on the dimension and/or shape of the pressure surface **45.** The dimensions and/or shape of the diversion passage **52** may depend on the fluid dynamics of the fluid coupler **42** and the corresponding fluid coupler.

Extending from the diversion passage **52** may be a diversion line **54.** The diversion line connects the diversion passage **52** to the chamber **26.** In an embodiment the diversion line **54** may extend laterally from the diversion passage **52** to the chamber **26.** In an embodiment, the diversion line **54** may be disposed such that the pressure surface **45** is positioned between the bores **46** and the diversion line **54.** In an embodiment the diversion passage is a hose mounted externally to the plunger **36.** In an embodiment, the diversion line **54** may have a smaller diameter than diversion passage **52** such that the fluid pressure increases as the hydraulic fluid enters the diversion line **54.** Hydraulic fluid flowing into the bore **46** may flow through the diversion passage **52** and the diversion line into the chamber **26.**

A check valve **56** may be provided at the junction of the diversion passage **52** and the diversion line **52.** The check valve **56** may permit flow of fluid from the diversion passage **52** to diversion lines **54** and prevent flow of fluid from the diversion line **54** to diversion passage **52.** In an embodiment, check valve **56** may be disposed such that the pressure surface **45** is positioned between the bore **46** and the check valve **56.**

With reference to Fig. 4 the coupler assembly **24** is retracted and may be disconnected from the corresponding fluid coupler. The gate portion **39** may be recessed into the cavity wide portion **18.** The gate portion **39** may be sealed from fluid entry by the cavity wide portion **18.** Port **49** of the machine circuit line **48** may be sealed by the plunger wide portion **40.**

In an embodiment, bore **46,** in the plunger **36** not provided with a gate portion **39,** may be recessed into the cavity wide portion **18** and may be sealed from fluid entry by the cavity wide portion **18.**

With reference to Fig. 5 the coupler assembly **24** is extended and may be connected to the corresponding fluid coupler. The gate portion **39** may be positioned to be in fluid communication with the port **49** of the machine circuit line **48.** Fluid may flow from the machine circuit line **48** through port **49** and into the gate portion **39.** Hydraulic fluid may flow around the gate portion **39** and into the hollow of plunger **36** through the plurality of bores **46.**

In an embodiment, when the gate portion **39** is in fluid communication with machine circuit line **48** the coupler assembly **24** may be at a fully extended position. In an embodiment, the gate portion **39** may have dimension and /or shape which corresponds to the port **49.**

In an embodiment with plunger **36** not provided with a gate portion **39,** when the coupler assembly **24** is extended the bore **46** may be positioned to be in fluid communication with the port **49** of the machine circuit line **48.** Fluid may flow from the machine circuit line **48** through port **49** and into the bore **46.** Hydraulic fluid may flow into the hollow of plunger **36** through the bore **46.**

In an embodiment, the bore **46** may have dimension and /or shape which corresponds to the port **49.** In an embodiment, when the bore **46** is in fluid communication with machine circuit line **48** the coupler assembly **24** may be at a fully extended position.

With reference to Fig. 2, the operation of the coupling arrangement **10** may be initiated by coupling a machine bracket **12** to a work tool bracket **14.** The hydraulic power circuit **35** may be activated to actuate the locking device **34** to lock machine bracket **12** to the work tool bracket **14.** The locking device **34** may be actuated to lock the brackets **12, 14** through increased fluid pressure through line X. In an embodiment, the increased fluid pressure may act on the rod side of the locking device **34.**

Upon locking of the brackets **12, 14,** pressure in the hydraulic lines may increase further. A pressure regulator **58** may be connected to line X. Pressure regulator **58** may open only when the locking pressure in the locking device **34** is higher than a preset value. In an embodiment, the value is selected from the range of 60 bar - 90 bar. In an embodiment, the value is 70 bar. Flow of hydraulic fluid to the bracket switch **30** and the rail circuit **13** may be prevented before the brackets **12, 14** are mechanically locked.

Hydraulic fluid may flow to the bracket switch **30** when the pressure regulator **58** opens to permit fluid flow. Bracket switch **30** may be activated if the work tool bracket **14,** carrying a corresponding fluid coupler, is coupled to the machine bracket **12.** Activation of the bracket switch **30** may-effects the actuation of a valve **60** to permit flow of fluid to check valve **62.**

Check valve **62** may permit fluid to flow into the rail circuit **13** and through rail circuit lines **50** to the chambers **26.** Increased flow of fluid in the chambers **26** results in increased fluid pressure therein. The fluid pressure acts on the pressure surfaces **45** of the coupler assemblies **24** effecting extension from the disconnect position to an extended position at which a fluid coupling between the fluid couplers **42** and the corresponding fluid couplers in the work tool bracket **14** is established. The build up of pressure in chamber **26** may not enter the hollow of plunger **36** as a result of the check valve **56** which blocks the flow of fluid from the diversion line **54** to the diversion passage **52.**

In an embodiment, check valve **62** may permit fluid to flow through the rail circuit **13** to the piston side of the actuators **28.** Increased flow of fluid into the piston side chambers of the actuators **28** may result in increased fluid pressure therein to effect extension of the actuators **28.** The actuators **28** are connected to the coupler assemblies **24** and may effect a corresponding extension of the coupler assemblies **24.** The extension of the coupler assemblies **24** through extension of the actuators **28** is in addition to the extension effected by the action of the pressurised fluid on the pressure surface **45.**

Extraction of the coupler assemblies **24** through the pressure build up in the chambers **26** and/ or extension of the actuators **28,** may connect lines A,B,C,D and L through respective lines **48** and ports **49** to the hollows of plungers **36** to allow fluid flow from the machine fluid circuit into the hollow of plunger **36.** If the machine fluid circuit is not actuated, fluid inside the hollow of plunger **36** may remain at atmospheric or tank pressure. Upon actuation of the machine fluid circuit the pressure in the lines **48** and the hollow of plunger **36** may increase.

At fluid coupling between the fluid couplers **42** and the corresponding fluid couplers, the gate portions **39** may be in fluid communication with ports **49** allowing fluid to flow through machine circuit lines **48** into the hollow of plunger **36.** Fluid may then pass through fluid channels **43** in the fluid couplers **42** to the respective channels in the corresponding fluid couplers.

In an embodiment, at fluid coupling between the fluid couplers **42** and the corresponding fluid couplers, the bores **46** of each plunger **36** may be in fluid communication with ports **49** allowing fluid to flow through machine circuit lines **48** into the hollow of plunger **36.** Fluid may then pass through fluid channels **43** in the fluid couplers **42** to the respective channels in the corresponding fluid couplers.

At fluid coupling between the fluid couplers **42** and the corresponding fluid couplers and flow of pressurised fluid through the respective fluid channels, separation forces may be generated which act on the fluid couplers. The separation forces may be countered by the fluid pressure acting on the pressure surface **45** and/ or the actuators **28.** In an embodiment, pressure in the chamber **26** may be sufficient to generate a force on the pressure surface **45** to maintain fluid coupling between the fluid couplers. In an embodiment, fluid coupling between the fluid couplers may be maintained through the pressure in the actuators **28** and the pressure in the chamber **26** acting on the pressure surface **45.**

The separation forces generated may be dependent on the pressure of the fluid in the machine circuit. In an embodiment, an increase in the machine fluid circuit pressure may result in a higher separation force between the fluid couplers. The pressure surface **45** may be provided such that the difference in the ratio between the fluid coupler surfaces and pressure surface **45** is greater than 1 so that force acting on pressure surface **45** is greater than the separation force.

The chamber **26** may be connected to the machine fluid circuit via the check valve **56** mounted in the plunger **36.** If pressure in the machine fluid circuit is higher than the pressure in the chamber **26,** the fluid in the hollow of the plunger **36** may be at a higher pressure value and may flow to the chamber **26** where the fluid pressure has a lower pressure value. The fluid at a higher pressure will flow from the hollow of the plunger **36** through the diversion passage **52,** the check valve **56** and the diversion line **54** into the chamber **26.** The flow of fluid may continue till the pressure in the chamber **36** and pressure in the hollow of the plunger **36** equalise.

As the pressure in the chamber **26** generates a force on the pressure surface **45,** the force acting on the pressure surface **45** may be equal to the separation forces generated by the fluid flowing from the hollow of plunger **36** through the fluid channels and which act on the fluid couplers. The equalising of pressures in the chamber **26** and the hollow of plunger **36** may serve to lock the coupler assemblies **24.** As all chambers **26** are connected through the rail circuit **13,** a higher pressure load in one chamber **26** may be distributed to the other chambers **26,** even if the pressures in the hollow of the respective plungers **36** may be at a lower pressure value.

As fluid may not flow from the chamber **26** to the hollow of plunger **36,** due to the check valve **56,** the pressure in the chamber **26** may remain even when the pressure inthe machine fluid circuit drops to a pressure value lower than the pressure value in the chamber **26.** The pressure level may be available in the chambers **26** independent of the pressure in the hydraulic lines A, B, C, D and L of the machine circuit. As all chambers **26** are connected through the rail circuit **13,** a balanced pressure load may be present to all coupler assemblies **24,** even if the machine circuit pressure is lower or absent.

In an embodiment, check vale **62** may be pilot operated to block inflow of fluid having potentially damaging fluid pressures so as to avoid damage to components that may not be designed to withstand a high pressure. The check valve **62** may block high pressure in the rail circuit **13** from reaching the locking device **34.**

In an embodiment, a pressure relief valve **64** may connect the rail circuit **13** to machine fluid circuit. The pressure relief valve **64** may be an adjustable pilot operated valve that is mounted to remove excessive pressure peaks generated in the machine fluid circuit that may be transmitted to the chambers **26** through the check valve **56** and the rail circuit **13.** The pressure relief valve **64** may have pressure setting that is significantly higher than the maximum pressure tolerable in the chambers **26** and the rail circuit **13** to avoid unintended loss of force needed to maintain fluid coupling. In an embodiment, the pressure relief valve **64** may have pressure setting selected from the range of 390 bar - 420 bar. In an embodiment, the pressure setting is 420 bar.

With reference to Fig. 2, operation of the coupling arrangement **10** to decouple machine bracket **12** from the work tool bracket **14** may be initiated by relieving pressure in the chambers **26** and the rail circuit line **50** through the rail circuit **13.**

In an embodiment, a primary drain circuit for the rail circuit **13** may be provided through a normally-open drainage switch **66** and primary drainage check valves **68, 70.** Drainage switch **66** may close to block the drain function, only when the chambers **26** and the rail circuit line **50** are pressurised.

Primary drainage check valves **68, 70** may be connected to the machine fluid circuit. In an embodiment primary drainage check valves **68, 70** may be connected to lines A and B, wherein either one of these lines may be depressurized to allow return fluid to flow back to the tank. The return fluid may consist of a fluid volume in the piston side of the actuators **28** and in the chambers **26.**

In an embodiment, further primary drainage check valves may be provided which are connected to the other hydraulic lines.

Pressure in line X may relieved while line Y may be pressurised though the hydraulic power circuit **35.** Fluid from line Y may flow into the rod side of the actuators **28.** Increase in pressure in the rod side and the reduction of pressure in the piston side may effect a retraction of the actuators **28.** As the actuators **28** are connected to the coupler assemblies **24,** the coupler assemblies **24** may be correspondingly retracted and disconnected from fluid coupling. The full retraction of the actuators **28** may correspondingly effect complete retraction of the coupler assemblies **24** into the machine bracket **12.**

A secondary drain circuit may consist of check valve **62** and secondary drainage check valve **72.** The valves **62** and **72** may allow fluid to flow back to the tank through line X but only if line Y is pressurised. The return fluid may consist of a fluid volume in the piston side of the actuators **28** and in the chambers **26.**

Switch **32** may detect the position of the actuators **28.** Switch **32** may be normally closed and may block flow of fluid from the hydraulic power circuit **35** through line Y to locking device **34.** At complete retraction of the actuators **28** the switch **32** may effect the actuation of the valve **73** to permit flow of fluid from the hydraulic power circuit **35** to the piston side of the locking device **34** to unlock the brackets **12, 14.** This is a safety measure to avoid unintended operation of the locking device **34** if the coupler assemblies have not been retracted completely into the machine bracket **12.**

A relief valve **74** may be provided in the hydraulic line connecting line Y and the rod sides of the actuators **28** to avoid any unintended drift of the actuators **28** in the disconnected position. The relief valve **74** may be pilot operated. The fluid in the rod side of the actuators **28** may be trapped unless chambers **26** and the lines **50** are pressurized to such level as to pressure regulator **58.**

The skilled person would appreciate that foregoing embodiments may be modified to obtain the apparatus of the present disclosure

### Industrial Applicability

This disclosure describes a coupling arrangement **10** for coupling a machine hydraulic fluid circuit to a work tool hydraulic fluid circuit. In a machine **1,** work tools **3** may be used for handling heavy materials. Work tools **3** may demolish, drill, dig, plow, cut, grab and/or carry heavy materials which may include sand, stone, metal, and more. Work tools **3** may are coupled to and powered by machines **1,** in particular mobile host machines. The machine **1** may be provided with transmissions, hydraulic equipment, booms **2** and/or sticks for driving the work tool **3.** Work tool operations may be controlled by the operator via an operating panel in the cab of the machine **1.**

The coupling arrangement **10** may have at least one hollow plunger **36** provided with a check valve **56.** The hollow plunger **36** may connect the machine fluid circuit to the rail fluid circuit through diversion passage **52** and diversion line **54.** The fluid pressure in the machine fluid circuit may be used to retain the fluid coupling of the fluid couplers. The check valve **56** may restrict the fluid flow from the rail fluid circuit to the machine fluid circuit.

In operation of the coupling arrangement **10,** pressure in the chambers **26** may be provided from either the rail fluid circuit, during the connection process, or the machine fluid circuit, during operation of the work tool. Check valves **56** and **62** may allow pressure to build up in the chambers **26.** The prevailing pressure value in the chambers **26** may be the higher of the pressure values of the machine fluid circuit or the rail fluid circuit. This pressure in the chambers **26** may remain even if the pressure source is no longer available. Pressure relief valve **64** may protect the chambers **26,** the rail circuit line **50** and the rail circuit **13** against damage as a result of excessive pressure.

The coupling arrangement **10** may have at least one hollow plunger **36** provided with a gate portion **39** having a plurality of bores **46** or a bore **46.** When the coupler assemblies **24** are retracted to a disconnect position, the chambers **26** may be sealed from the hydraulic lines of the machine fluid circuit. At disconnection, the coupler assembly **24** may not be actuated unintentionally as a result of pressure build up in the hydraulic lines of the machine fluid circuit when fluid coupling has not yet been established.

The coupling arrangement **10** may have a rail fluid circuit to ensure a balanced load on the coupler assemblies **24.** All chambers **26** may be connected through the rail fluid circuit to allow the highest pressure in any of the hydraulic lines of the machine fluid circuit or of the rail fluid circuit to generate the load required to retain fluid coupling between the fluid couplers.

The coupling arrangement **10** has a bracket switch **30** to detect whether the work tool bracket **14** carries a corresponding fluid coupler. Bracket switch **30** may not permit fluid pressurisation of the rail fluid circuit when a work tool bracket **14** carrying a corresponding fluid coupler is not detected. The bracket switch **30** may avoid inefficient coupling present in devices wherein fluid connections are established simultaneously at mechanical coupling of the machine bracket and the work tool bracket.

The coupling arrangement **10** may have a switch **32** to detect whether the actuators **28** are fully retracted. The activation of switch **32** determines whether the locking device **34** may be actuated to unlock the brackets **12, 14** without the risk of potential damage to the fluid couplers and/or couplers assemblies **24.**

The industrial applicability of the coupling arrangement **10** as described herein will have been readily appreciated from the foregoing discussion.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A coupling arrangement (10) for fluid coupling a work tool (3) to a machine (1) comprising:
a plurality of coupler assemblies (24) slideably mounted for coupling a machine fluid circuit and a work tool fluid circuit at a connect position wherein the coupler assemblies (24) are slidable in a plurality of cavities (16);
an actuation circuit connected to the plurality of cavities (16) for actuation of the coupler assemblies (24) from a disconnect position to the connect position by actuation of a pressurized fluid line on a surface (45) of each of the coupler assemblies ;
and
a sensor (30) to detect presence of the work tool for activation of the actuation circuit ;
**characterised in that** the actuation circuit further comprises at least one actuator (28), the at least one actuator (28) being connected to the coupler assemblies (24) and being arranged to effect a corresponding extension of the coupler assemblies (24) from the disconnect position to the connect position, and the sensor (30) is further
arranged to actuate a valve (60) to permit the
pressurised fluid to flow to the at least one actuator (28), the plurality of cavities (16) and the coupler assemblies (24) in the presence of the work tool.

2. A coupling arrangement (10) according to claim 1 wherein the sensor (30) is a solenoid switch.

3. A coupling arrangement (10) according to claim 1 or 2 wherein the sensor (30) is a hydro mechanical switch.

4. A method of coupling a work tool (3) to a machine (1) comprising:
providing a plurality of coupler assemblies (24) slideably mounted for coupling a machine fluid circuit and a work tool fluid circuit wherein the coupler assemblies (24) are slidable in a plurality of cavities (16);
arranging an actuation circuit to actuate the coupler assemblies (24) from a disconnect position to the connect position by actuation of a pressurized fluid line on a surface (45) of each of the coupler assemblies wherein the actuation circuit is connected to the plurality of cavities (16) ,; and
arranging a sensor (30) to detect presence of the work tool; and
permitting pressurised fluid to flow into the actuation circuit for actuating the coupler assemblies (24) to the connect position when the work tool (3) is mounted to the machine (1);
**characterised in that** the actuation circuit further comprises at least one actuator (28), the at least one actuator (28) being connected to the coupler assemblies (24) and being arranged to effect a corresponding extension of the coupler assemblies (24) from the disconnect position to the connect position;
further comprising the step of actuating a valve (60) by the sensor (30) to permit the pressurised fluid to flow to the at least one actuator (28), the plurality of cavities (16) and to the coupler assemblies (24) in the presence of the work tool.

## Patentansprüche

1. Kupplungsanordnung (10) zur Fluidkupplung eines Arbeitswerkzeugs (3) an eine Maschine (1), umfassend:
eine Vielzahl von Kuppelbaugruppen (24), die verschiebbar montiert sind, um einen Maschinen-Fluidkreis und einen Arbeitswerkzeug-Fluidkreis bei einer Verbindungsposition zu kuppeln, wobei die Kuppelbaugruppen (24) in einer Vielzahl von Hohlräumen (16) verschiebbar sind;
einen Betätigungskreis, der mit der Vielzahl von Hohlräumen (16) zur Betätigung der Kuppelbaugruppen (24) aus einer Trennposition in die Verbindungsposition durch Betätigung einer Druckfluidleitung auf einer Oberfläche (45) jeder der Kuppelbaugruppen verbunden ist;
und
einen Sensor (30) zum Erfassen des Vorhandenseins des Arbeitswerkzeugs zur Aktivierung des Betätigungskreises;
**dadurch gekennzeichnet, dass** der Betätigungskreis ferner mindestens ein Stellglied (28) umfasst, wobei das mindestens eine Stellglied (28) mit den Kuppelbaugruppen (24) verbunden ist und angeordnet ist, um ein entsprechendes Ausfahren der Kuppelbaugruppen (24) aus der Trennposition in die Verbindungsposition zu bewirken, und wobei der Sensor (30) ferner angeordnet ist, um ein Ventil (60) zu betätigen, um zu ermöglichen, dass das unter Druck stehende Fluid bei Vorhandensein des Arbeitswerkzeugs zu dem mindestens einen Stellglied (28), der Vielzahl von Hohlräumen (16) und den Kuppelbaugruppen (24) strömt.

2. Kupplungsanordnung (10) nach Anspruch 1, wobei der Sensor (30) ein Magnetschalter ist.

3. Kupplungsanordnung (10) nach Anspruch 1 oder 2, wobei der Sensor (30) ein hydromechanischer Schalter ist.

4. Verfahren zum Kuppeln eines Arbeitswerkzeugs (3) an eine Maschine (1), umfassend:
Bereitstellen einer Vielzahl von Kuppelbaugruppen (24), die verschiebbar montiert sind, um einen Maschinen-Fluidkreis und einen Arbeitswerkzeug-Fluidkreis zu kuppeln, wobei die Kuppelbaugruppen (24) in einer Vielzahl von Hohlräumen (16) verschiebbar sind;
Anordnen eines Betätigungskreises, um die Kuppelbaugruppen (24) aus einer Trennposition in die Verbindungsposition durch Betätigung einer Druckfluidleitung auf einer Oberfläche (45) jeder der Kuppelbaugruppen zu betätigen, wobei der Betätigungskreis mit der Vielzahl von Hohlräumen (16) verbunden ist,; und
Anordnen eines Sensors (30), um das Vorhandensein des Arbeitswerkzeugs zu erfassen; und
Ermöglichen, dass das unter Druck stehende Fluid in den Betätigungskreis fließt, um die Kuppelbaugruppen (24) in die Verbindungsposition zu betätigen, wenn das Arbeitswerkzeug (3) an der Maschine (1) montiert ist;
**dadurch gekennzeichnet, dass** der Betätigungskreis ferner mindestens ein Stellglied (28) umfasst, wobei das mindestens eine Stellglied (28) mit den Kuppelbaugruppen (24) verbunden ist und angeordnet ist, um ein entsprechendes Ausfahren der Kuppelbaugruppen (24) aus der Trennposition in die Verbindungsposition zu bewirken;
ferner umfassend den Schritt des Betätigens eines Ventils (60) durch den Sensor (30), um zu ermöglichen, dass das unter Druck stehende Fluid bei Vorhandensein des Arbeitswerkzeugs zu dem mindestens einen Stellglied (28), der Vielzahl von Hohlräumen (16) und zu den Kuppelbaugruppen (24) strömt.

## Revendications

1. Agencement de couplage (10) pour le couplage fluidique d'un outil de travail (3) à une machine (1) comprenant :
une pluralité d'ensembles de couplage (24) montés de manière coulissante pour coupler un circuit de fluide de machine et un circuit de fluide d'outil de travail au niveau d'une position de connexion dans lequel les ensembles de couplage (24) peuvent coulisser dans une pluralité de cavités (16) ;
un circuit d'actionnement connecté à la pluralité de cavités (16) pour l'actionnement des ensembles de couplage (24) d'une position de déconnexion à la position de connexion par actionnement d'une ligne de fluide sous pression sur une surface (45) de chacun des ensembles de couplage ;
et
un capteur (30) pour détecter une présence de l'outil de travail pour l'activation du circuit d'actionnement ;
**caractérisé en ce que** le circuit d'actionnement comprend en outre au moins un actionneur (28), l'au moins un actionneur (28) étant connecté aux ensembles de couplage (24) et étant agencé pour effectuer une extension correspondante des ensembles de couplage (24) de la position de déconnexion à la position de connexion, et le capteur (30) est en outre agencé pour actionner une vanne (60) pour permettre au fluide sous pression de s'écouler vers l'au moins un actionneur (28), la pluralité de cavités (16) et les ensembles de couplage (24) en présence de l'outil de travail.

2. Agencement de couplage (10) selon la revendication 1, dans lequel le capteur (30) est un commutateur à solénoïde.

3. Agencement de couplage (10) selon la revendication 1 ou 2, dans lequel le capteur (30) est un commutateur hydromécanique.

4. Procédé de couplage d'un outil de travail (3) à une machine (1) comprenant :
la fourniture d'une pluralité d'ensembles de couplage (24) montés de manière coulissante pour le couplage d'un circuit de fluide de machine et d'un circuit de fluide d'outil de travail dans lequel les ensembles de couplage (24) peuvent coulisser dans une pluralité de cavités (16) ;
l'agencement d'un circuit d'actionnement pour actionner les ensembles de couplage (24) d'une position de déconnexion à la position de connexion par actionnement d'une ligne de fluide sous pression sur une surface (45) de chacun des ensembles de couplage dans lequel le circuit d'actionnement est connecté à la pluralité de cavités (16) ; et
l'agencement d'un capteur (30) pour détecter une présence de l'outil de travail ; et
le fait de permettre à un fluide sous pression de s'écouler dans le circuit d'actionnement pour actionner les ensembles de couplage (24) à la position de connexion lorsque l'outil de travail (3) est monté sur la machine (1) ;
**caractérisé en ce que** le circuit d'actionnement comprend en outre au moins un actionneur (28), l'au moins un actionneur (28) étant connecté aux ensembles de couplage (24) et étant agencé pour effectuer une extension correspondante des ensembles de couplage (24) de la position de déconnexion à la position de connexion ;
comprenant en outre l'étape d'actionnement d'une vanne (60) par le capteur (30) pour permettre au fluide sous pression de s'écouler vers l'au moins un actionneur (28), la pluralité de cavités (16) et vers les ensembles de couplage (24) en présence de l'outil de travail.
